# DEMANDE DE BREVET EUROPEEN

(11) **EP 4 663 445 A1**
(43) Date de publication de la demande: **17.12.2025**
(21) Numéro de dépôt: 25174276.3
(22) Date de dépôt: 05.05.2025
(51) Int. Cl.: B60K 1/04

(54) **VEHICULE AUTOMOBILE COMPRENANT DES TRAVERSES DE LOGEMENT DE BATTERIE QUI COMPRENNENT DES CANALISATIONS D'EVACUATION EN CATAPHORESE, ET PROCEDE DE FABRICATION D'UN TEL VEHICULE**

(30) Priorité: 11.06.2024 FR 2406159
(71) Demandeur: Stellantis Auto SAS, 78300 Poissy (FR)
(72) Inventeur: CHAUVEAU, CHRISTOPHE, 78370 PLAISIR (FR)
(74) Mandataire: PSIP

(57) **Abrégé**

L'invention concerne un véhicule automobile comprenant une caisse qui comprend :
- un habitacle délimité en partie inférieure par un plancher (P) en référence à l'axe vertical (Z), le plancher (P) comportant au moins un trou d'évacuation (E) ;
- un logement (L) apte à recevoir une batterie de traction, délimité en partie supérieure par le plancher (P) en référence à l'axe vertical (Z), comprenant au moins une traverse (T) s'étendant au moins verticalement en référence à l'axe vertical (Z),
caractérisé en ce que ladite traverse (T) comprend une canalisation (C) verticale suivant l'axe vertical (Z), en communication fluidique avec ledit trou d'évacuation (E).

L'invention concerne également un procédé de fabrication d'un tel véhicule.

## Description

L'invention se rapporte au domaine de l'architecture du soubassement véhicule, en particulier dans le cadre de procédés de cataphorèse. L'invention concerne plus particulièrement une architecture de véhicule électrique à batterie de traction BEV à « cellule dans le châssis » (ou « cell to body » en langue anglaise).

Le traitement anti-corrosion du véhicule nécessite le passage de la caisse ferrée dans un bain de cataphorèse. L'évacuation de la cataphorèse à la sortie du bain se fait par gravité via des trous aménagés dans le plancher de la caisse du véhicule automobile.

Dans une architecture BEV à « cellule dans le châssis », le plancher côté habitacle fait office de capot pour la batterie de traction. Il est important de garantir l'étanchéité du pack batterie en fonctionnement, mais également en cas de dysfonctionnement de la batterie en particulier dans le cas d'un emballement thermique (ou « thermal runaway » en langue anglaise).

Dans ce contexte, des obturateurs classiques prévus dans les trous de plancher dans l'art antérieur, ne permettent pas de répondre en l'état aux exigences thermiques en cas d'emballement thermique, et d'architecture en termes d'empilage en hauteur des modules de batterie sous le plancher compte tenu de la hauteur des obturateurs usuels.

Un objectif de l'invention est de proposer une solution d'obturation des trous d'évacuation répondant aux exigences thermiques, et d'architecture en termes d'empilage en hauteur.

Pour atteindre cet objectif, l'invention propose un véhicule automobile présentant un repère dans l'espace comprenant un axe longitudinal suivant une direction de déplacement du véhicule automobile ; un axe latéral perpendiculaire à l'axe longitudinal, et un axe vertical perpendiculaire à l'axe longitudinal et à l'axe latéral, le véhicule automobile comprenant une caisse qui comprend :
- un habitacle délimité en partie inférieure par un plancher en référence à l'axe vertical, le plancher comportant au moins un trou d'évacuation ;
- un logement apte à recevoir une batterie de traction, délimité en partie supérieure par le plancher en référence à l'axe vertical, comprenant au moins une traverse s'étendant au moins verticalement en référence à l'axe vertical, caractérisé en ce que ladite traverse comprend une canalisation verticale suivant l'axe vertical, en communication fluidique avec ledit trou d'évacuation.

Avantageusement, l'invention permet de :
- supprimer la contrainte d'empilage en hauteur des obturateurs sur les modules de la batterie côté pack batterie ;
- supprimer la contrainte en hauteur vis-à-vis de l'insonorisation côté tapis d'habitacle, sans diminution de l'épaisseur, en aménageant des cuvettes sur le plancher au niveau des obturateurs si besoin ;
- assurer une protection thermique partielle des obturateurs par les traverses en cas d'emballement thermique afin de limiter les risques de feu dans l'habitacle et d'améliorer la tenue thermique des obturateurs ;
- limiter les risques de déformation de la caisse en cas de chocs en positionnant les trous dans une zone rigide du plancher ;
- conserver une maintenabilité des obturateurs contrairement à une solution d'obturation du type à adhésif sous le plancher.

De préférence, ladite traverse et la canalisation sont disposées en dessous dudit trou d'évacuation en référence à l'axe vertical, à la même position que ledit trou d'évacuation en référence à l'axe longitudinal et à l'axe latéral.

Cela permet de faciliter l'évacuation du fluide de cataphorèse par gravité tout en rigidifiant les zones de trous du plancher par des traverses.

Préférentiellement, la caisse comprend en outre un obturateur fermant le trou d'évacuation par le dessus en référence à l'axe vertical, de manière amovible
Cela permet d'optimiser l'encombrement en hauteur selon l'axe vertical dans le logement pour les modules de batterie.

De préférence, l'obturateur est un obturateur thermofusible ou un obturateur adhésif.

Cela permet renforcer l'obturation par l'obturateur en cas d'emballement thermique.

Selon une variante, l'obturateur est un obturateur oblong.

Cela permet d'avoir un sens de mise en place de l'obturateur.

L'invention porte en outre sur un procédé de fabrication d'un véhicule automobile selon l'invention, comprenant une étape de cataphorèse qui comprend une évacuation d'un liquide par le trou d'évacuation à travers la canalisation de ladite traverse.

De préférence, le procédé de fabrication comprend en outre une étape d'obturation du trou d'évacuation au moyen d'un obturateur inséré dans le trou d'évacuation par le dessus en référence à l'axe vertical.

L'invention sera davantage détaillée par la description de modes de réalisation non limitatifs, et sur la base des figures annexées illustrant des modes de réalisation préférés de l'invention, dans lesquelles :
- [Fig.1] illustre schématiquement une vue dans l'espace illustrant le dessous d'un plancher et l'intérieur d'un logement d'un véhicule selon un mode de réalisation préféré de l'invention, sans modules de batterie ;
- [Fig.2] illustre schématiquement une vue en coupe transversale du logement de véhicule de la figure 1, avec des modules de batterie ; et
- [Fig.3] illustre schématiquement une vue en coupe transversale rapprochée d'une canalisation et d'une traverse du logement de la figure 2.

L'invention concerne un véhicule automobile définit en référence à un repère dans l'espace comprenant un axe longitudinal X suivant une direction de déplacement du véhicule automobile ; un axe latéral Y perpendiculaire à l'axe longitudinal X, et un axe vertical Z perpendiculaire à l'axe longitudinal X et à l'axe latéral Y.

Le véhicule automobile comprenant une caisse qui comprend un habitacle supérieur et un logement L inférieur recevant des modules de batterie M d'une batterie de traction de véhicule automobile.

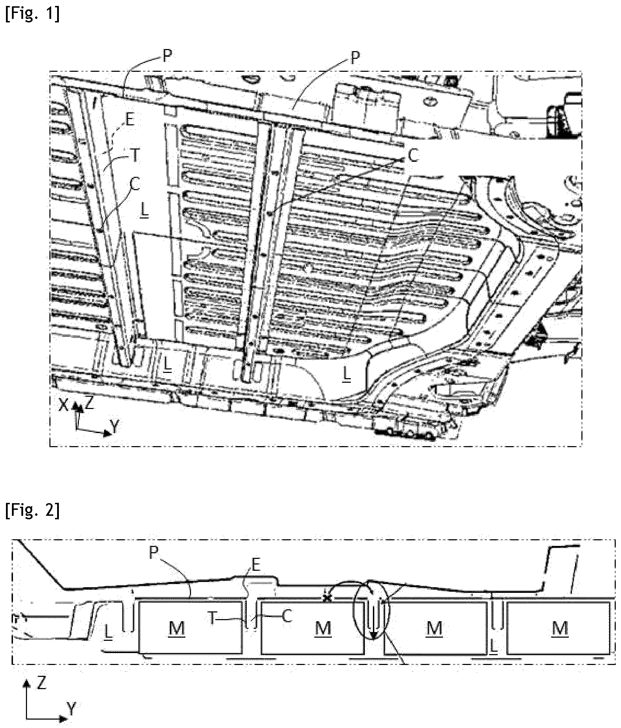

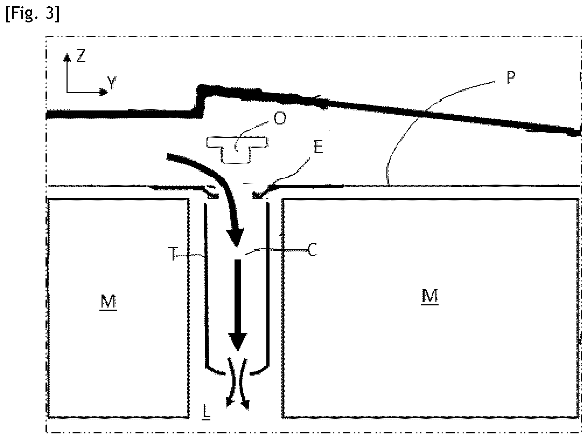

L'habitacle est délimité en partie inférieure par un plancher P en référence à l'axe vertical Z. Aux fins d'étape de cataphorèse, le plancher P comporte des trous d'évacuation E illustrés en figure 2 et 3.

Le logement L et le plancher P sont illustrés en figure 1, et les modules de batterie ne sont pas représentés dans cette figure.

Le logement L est délimité en partie supérieure par le plancher P en référence à l'axe vertical Z. Le logement L comprend des traverses T s'étendant au moins verticalement en référence à l'axe vertical Z. Ces traverses T permettent de rigidifier le logement L et de protéger les modules de batterie M mis en place dans le logement L.

Selon l'invention, ladite traverse T comprend une canalisation C verticale suivant l'axe vertical Z, en communication fluidique avec ledit trou d'évacuation E. En particulier, ladite traverse T et la canalisation C sont disposées en dessous dudit trou d'évacuation E en référence à l'axe vertical Z, à la même position que ledit trou d'évacuation E en référence à l'axe longitudinal X et à l'axe latéral Y.

Après la cataphorèse, il faut refermer le trou d'évacuation E. A cet effet, la caisse comprend en outre un obturateur O fermant le trou d'évacuation E par le dessus en référence à l'axe vertical Z, de manière amovible. En particulier, l'obturateur O est un obturateur thermofusible.

L'obturateur O est inséré dans le trou d'évacuation E par le dessus en référence à l'axe vertical Z, pour le refermer.

## Revendications

1. Véhicule automobile présentant un repère dans l'espace comprenant un axe longitudinal (X) suivant une direction de déplacement du véhicule automobile ; un axe latéral (Y) perpendiculaire à l'axe longitudinal (X), et un axe vertical (Z) perpendiculaire à l'axe longitudinal (X) et à l'axe latéral (Y), le véhicule automobile comprenant une caisse qui comprend :
- un habitacle délimité en partie inférieure par un plancher (P) en référence à l'axe vertical (Z), le plancher (P) comportant au moins un trou d'évacuation (E) ;
- un logement (L) apte à recevoir une batterie de traction, délimité en partie supérieure par le plancher (P) en référence à l'axe vertical (Z), comprenant au moins une traverse (T) s'étendant au moins verticalement en référence à l'axe vertical (Z),
**caractérisé en ce que** ladite traverse (T) comprend une canalisation (C) verticale suivant l'axe vertical (Z), en communication fluidique avec ledit trou d'évacuation (E).

2. Véhicule automobile selon la revendication 1, **caractérisé en ce que** ladite traverse (T) et la canalisation (C) sont disposées en dessous dudit trou d'évacuation (E) en référence à l'axe vertical (Z), à la même position que ledit trou d'évacuation (E) en référence à l'axe longitudinal (X) et à l'axe latéral (Y).

3. Véhicule automobile selon l'une quelconque des revendications 1 à 2, **caractérisé en ce que** la caisse comprend en outre un obturateur (O) fermant le trou d'évacuation (E) par le dessus en référence à l'axe vertical (Z), de manière amovible.

4. Véhicule automobile selon la revendication 3, **caractérisé en ce que** l'obturateur (O) est un obturateur thermofusible ou un obturateur adhésif.

5. Véhicule automobile selon l'une quelconque des revendications 3 à 4, **caractérisé en ce que** l'obturateur (O) est un obturateur oblong.

6. Procédé de fabrication d'un véhicule automobile selon l'une quelconque des revendications 1 à 5, comprenant une étape de cataphorèse qui comprend une évacuation d'un liquide par le trou d'évacuation (E) à travers la canalisation (C) de ladite traverse (T).

7. Procédé de fabrication selon la revendication 6, comprenant en outre une étape d'obturation du trou d'évacuation (E) au moyen d'un obturateur (O) inséré dans le trou d'évacuation (E) par le dessus en référence à l'axe vertical (Z).
